# EUROPÄISCHE PATENTANMELDUNG

(11) **EP 2 397 434 A1**
(43) Veröffentlichungstag der Anmeldung: **21.12.2011**
(21) Anmeldenummer: 11004836.0
(22) Anmeldetag: 14.06.2011
(51) Int. Cl.: B66B 9/04, B66B 1/30

(54) **Aufzugsanlage mit Energierückspeisung zum Erhitzen eines Wärmespeichermediums**

(30) Priorität: 17.06.2010 DE 102010024129
(71) Anmelder: Aufzugswerke M. Schmitt & Sohn GmbH & Co. KG, 90402 Nürnberg (DE)
(72) Erfinder: Kaldenhoff, Peter Dipl.-Ing., 90491 Nürnberg (DE)
(74) Vertreter: LOUIS, PÖHLAU, LOHRENTZ

(57) **Zusammenfassung**

Die Erfindung betrifft eine Aufzugsanlage (1) und ein Verfahren zu dessen Betrieb. Die Aufzugsanlage (1) weist einen elektrischen Antrieb (2) und/oder einen hydraulischen Antrieb (3) zum Antreiben eines Fahrkorbs (4) auf. Von dem als eine elektromotorische Bremse betriebenen elektrischen Antrieb (2) erzeugter elektrischer Strom und/oder eine beim Betrieb des hydraulischen Antriebs (3) erhitzte Hydraulikflüssigkeit dient zum Erhitzen eines Wärmespeichermediums (5).

## Beschreibung

DE-C-3717119 beschreibt eine Rückspeisung von elektrischem Strom, der von einem als elektromotorische Bremse betriebenen Aufzugsmotor generiert wird, in das Stromnetz. Ebenfalls wird beschrieben, den so generierten elektrischen Strom in einem Bremswiderstand in Abwärme umzuwandeln.

Der Erfindung liegt nun die Aufgabe zugrunde, eine verbesserte Aufzugsanlage sowie ein verbessertes Verfahren zum Betreiben einer Aufzugsanlage anzugeben.

Die Aufgabe wird gelöst durch eine Aufzugsanlage mit einem elektrischen und/oder hydraulischen Antrieb zum Antreiben eines Fahrkorbs, wobei von dem als eine elektromotorische Bremse betriebenen elektrischen Antrieb erzeugter elektrischer Strom und/oder eine beim Betrieb des hydraulischen Antriebs erhitzte Hydraulikflüssigkeit zum Erhitzen eines Wärmespeichermediums dient. Die Aufgabe wird ferner gelöst durch ein Verfahren zum Betreiben einer Aufzugsanlage mit einem elektrischen und/oder hydraulischen Antrieb zum Antreiben eines Fahrkorbs, wobei von dem als eine elektromotorische Bremse betriebenen elektrischen Antrieb erzeugter elektrischer Strom und/oder eine beim Betrieb des hydraulischen Antriebs erhitzte Hydraulikflüssigkeit zum Erhitzen eines Wärmespeichermediums verwendet wird.

Eine Aufzugsanlage mit einem elektrischen Antrieb kann als ein Seilaufzug, vorzugsweise als ein Treibscheibenaufzug, ausgebildet sein. Eine Aufzugsanlage mit einem hydraulischen Antrieb wird als hydraulischer Aufzug bezeichnet.

Der elektrische Antrieb ist ein elektrischer Antriebsmotor, d.h. ein Elektromotor. Bei einem Betrieb des elektrischen Antriebsmotors als eine elektromotorische Bremse, auch elektrische Generatorbremse genannt, wird der elektrische Antriebsmotor beim Abbremsen als Stromerzeuger, d.h. als Generator, verwendet. Beim Treibscheibenaufzug wird das Tragseil, das an einem Ende den Fahrkorb und am anderen Ende ein Gegengewicht trägt, über eine angetriebene Rolle, die Treibscheibe, geführt. Dabei ist es üblich, dass das Gewicht des Gegengewichts dem des halbvoll beladenen Fahrkorbs entspricht. Ob der elektrische Antriebsmotor als eine elektromotorische Bremse betrieben wird, hängt also von der Fahrtrichtung und dem Beladungszustand des Fahrkorbs ab. Die potentielle und die kinetische Energie des Fahrkorbs, die über ein Tragseil auf den elektrischen Antriebsmotor übertragen wird, lässt den als eine elektromotorische Bremse betriebenen elektrischen Antriebsmotor als Generator laufen, so dass die potentielle und die kinetische Energie des Fahrkorbs in elektrische Energie umgewandelt wird.

Die Umwandlung von Strom, der von einem als elektromotorische Bremse betriebenen Aufzugsmotor generiert wird, in ungenutzte Abwärme stellt eine Verschwendung von Energie dar. Die oftmals als Alternative praktizierte Einspeisung des Stroms in ein Stromnetz erfordert allerdings eine Einspeiseeinheit, die im Standby-Betrieb, wenn der Aufzugsmotor keinen Strom generiert, elektrische Energie verbraucht. Außerdem wird in vielen Fällen in ein öffentliches Stromnetz eingespeister Strom nicht oder nur gering vergütet. Die vorliegende Erfindung vermeidet diese Nachteile, indem sie eine Nutzung des von einem als elektromotorische Bremse betriebenen Aufzugsmotor generierten Stroms zum Erhitzen eines Wärmespeichermediums bietet.

Beim hydraulische Aufzugsantrieb wird Kraft mittels einer Hydraulikflüssigkeit von einer beispielsweise elektrisch betriebenen Hydraulikpumpe zu einem Hydraulikkolben übertragen. Dabei ist die Hydraulikpumpe üblicherweise in der Hydraulikflüssigkeit angeordnet, die die Maschinenabwärme der Pumpe aufnimmt und sich dadurch erwärmt. Bei einer Abwärtsfahrt wird potentielle und kinetische Energie des Fahrkorbs in Wärme umgewandelt, wenn die Hydraulikflüssigkeit durch das Gewicht des Fahrkorbs unter hohem Druck durch ein Rückflussventil gepresst wird, das so bemessen ist, dass die Geschwindigkeit des Fahrkorbs eine zulässige Höchstgeschwindigkeit nicht überschreitet. Beim Betrieb des hydraulischen Antriebs kommt es zu hohen Strömungsverlusten im Inneren der hydraulischen Flüssigkeit, die in Wärme umgesetzt werden und die Hydraulikflüssigkeit aufheizen. Die Wärmeenergie des aufgeheizten hydraulischen Antriebs wird in der Regel als ungenutzte Abwärme an die Umgebung abgegeben, was eine Verschwendung von Energie darstellt. Die Wärmeentwicklung im hydraulischen Antrieb kann allerdings so stark sein, dass eine aktive Kühlung nötig ist. Dies führt zu hohen Betriebskosten und in der Regel ebenfalls zu ungenutzter Abgabe der Wärmeenergie an die Umwelt. Die vorliegende Erfindung vermeidet diese Nachteile, indem sie eine Nutzung der beim Betrieb des hydraulischen Antriebs erhitzten Hydraulikflüssigkeit zum Erhitzen eines Wärmespeichermediums bietet.

Die vorgeschlagene Erfindung ist einfach umzusetzen und für den größten Teil der Aufzugsanlagen rentabel, da Aufzugsanlagen hauptsächlich in Wohngebäuden, Bürogebäuden, öffentlichen Gebäuden und in der Industrie betrieben werden, wo überall Bedarf an Warmwasser und Heizung besteht. Die vorliegende Erfindung kann sowohl für bestehende als auch für erst zu errichtende Aufzugsanlagen in einfacher und kostengünstiger Weise genutzt werden, da für ihre Umsetzung eine herkömmliche Aufzugsanlage nur um wenige standardisierte Bauelemente erweitert werden muss, die auf dem Markt erhältlich sind. Die anfallenden Investitions- und Betriebskosten sind gering.

Vorteilhafte Ausgestaltungen der Erfindung sind in den Unteransprüchen bezeichnet.

Es ist möglich, dass das Wärmespeichermedium Wasser eines Warmwasserspeichers ist. Ein Warmwasserspeicher dient zum Speichern und Bereithalten von erwärmtem Betriebswasser. Dabei kann es sich beispielsweise um Warmwasser für Bewohner eines Wohngebäudes oder um Warmwasser für industrielle Zwecke handeln. Der von dem als eine elektromotorische Bremse betriebenen elektrischen Antrieb erzeugte elektrische Strom und/oder die beim Betrieb des hydraulischen Antriebs erhitzte Hydraulikflüssigkeit kann zum Erhitzen des Wassers im Warmwasserspeicher dienen. Es ist auch möglich, dass das Wärmespeichermedium Wasser einer Warmwasserheizung ist. Eine Warmwasserheizung weist einen Wasserkreislauf auf, durch den die im erwärmten Wasser gespeicherte Wärmeenergie zu Heizkörpern transportiert wird. Der von dem als eine elektromotorische Bremse betriebenen elektrischen Antrieb erzeugte elektrische Strom und/oder die beim Betrieb des hydraulischen Antriebs erhitzte Hydraulikflüssigkeit kann zum Erhitzen des Wassers im Wasserkreislauf der Warmwasserheizung, des Wassers in einem Pufferspeicher oder des Wassers in einem Kombispeicher dienen. Es ist außerdem möglich, dass das Wärmespeichermedium Wasser eines Warmwasserspeichers und Wasser einer Warmwasserheizung ist.

Es ist möglich, dass die Aufzugsanlage mit einem elektrischen Antrieb eine elektrische Stromleitung aufweist, die der Leitung des elektrischen Stroms von dem elektrischen Antrieb zu einem elektrischen Heizelement zum Erhitzen des Wärmespeichermediums dient. Das elektrische Heizelement wandelt den elektrischen Strom mittels eines Heizwiderstands in Wärme um, wobei die freigesetzte Wärme das Wärmespeichermedium erhitzt. Ein elektrisches Heizelement kann eine stromdurchflossene Heizwendel aufweisen, die gegenüber dem zu erwärmenden Medium elektrisch isoliert ist.

Es ist möglich, dass die Aufzugsanlage mit einem hydraulischen Antrieb eine Rohrleitung aufweist, die dem Transport der erhitzten Hydraulikflüssigkeit von dem hydraulischen Antrieb zu einem Wärmetauscher zur Übertragung thermischer Energie von der erhitzten Hydraulikflüssigkeit auf das Wärmespeichermedium dient, z. B. ein Wärmetauscher von Öl in Wasser. Ein Wärmetauscher wird auch als Wärmeübertrager bezeichnet. Dabei ist es möglich, dass das Rohrleitungssystem einen Vorlauf aufweist, in dem die erhitzte Hydraulikflüssigkeit von dem hydraulischen Antrieb zu einem Wärmetauscher fließt, der von dem Wärmespeichermedium umflossen ist. Dabei ist es außerdem möglich, dass das Rohrleitungssystem einen Rücklauf aufweist, in dem die im Wärmetauscher abgekühlte Hydraulikflüssigkeit von dem Wärmetauscher zu dem hydraulischen Antrieb fließt. Die Hydraulikflüssigkeit fließt also in einem Kreislauf von dem hydraulischen Antrieb durch den Vorlauf des Rohrleitungssystems, den Wärmetauscher und den Rücklauf des Rohrleitungssystems, um wieder zum hydraulischen Antrieb zu gelangen. Der Fluss der Hydraulikflüssigkeit wird vorzugweise durch eine Pumpe, die in den Kreislauf geschaltet ist, aufrecht erhalten. Vorzugsweise ist der Wärmetauscher als ein Flüssig-Flüssig-Wärmeübertrager, wie ein Spiralwärmetauscher, ausgebildet.

Es ist möglich, dass die Aufzugsanlage mit einem hydraulischen Antrieb einen Wärmetauscher zur Übertragung thermischer Energie von der erhitzten

Hydraulikflüssigkeit auf ein Wärmetransportmedium, das dem Transport der thermischen Energie zu dem Wärmespeichermedium dient, aufweist. Es ist bevorzugt, dass das Wärmetransportmedium Wasser ist, da es eine hohe spezifische Wärmekapazität aufweist. Das Wärmetransportmedium kann aber auch jedes andere Wärmetransportmedium sein, beispielsweise ein Gas, eine wässrige Lösung, ein Öl. Dabei kann in dem hydraulischen Antrieb ein Wärmeübertrager, beispielsweise ein Flüssig-Flüssig-Wärmeübertrager wie ein Spiralwärmetauscher, angeordnet sein, an dem die Wärmeenergie der erhitzten Hydraulikflüssigkeit auf das Wärmetransportmedium übertragen wird, z. B. ein Wärmetauscher von Öl in Wasser. Die auf das Wärmetransportmedium übertragene Wärmeenergie wird durch ein Rohrleitungssystem zu dem Wärmespeichermedium transportiert und dort, ebenfalls mittels eines Wärmeübertragers, z. B. ein Wärmetauscher von Wasser in Wasser, in das Wärmespeichermedium übertragen.

Dabei ist es möglich, dass das Wärmetransportmedium in einem Rohrleitungssystem zirkuliert, das einen Vorlauf aufweist, in dem das erhitzte Wärmetransportmedium von dem Wärmetauscher im hydraulischen Antrieb zu einem Wärmetauscher fließt, der von dem Wärmespeichermedium umflossen ist. Dabei ist es außerdem möglich, dass das Rohrleitungssystem einen Rücklauf aufweist, in dem das abgekühlte Wärmetransportmedium von dem vom Wärmespeichermedium umflossenen Wärmetauscher zu dem Wärmetauscher im hydraulischen Antrieb fließt. Das Wärmetransportmedium fließt also in einem Kreislauf. Der Fluss des Wärmetransportmediums wird vorzugsweise durch eine Pumpe, die in den Kreislauf geschaltet ist, aufrecht erhalten.

Der Vorteil dieser Ausgestaltung liegt darin, dass die Hydraulikflüssigkeit und das Wärmespeichermedium in ihren Systemen verbleiben und ein drittes Medium, das Wärmetransportmedium, vorzugsweise ein effektives, billiges und umweltfreundliches Transportmedium wie Wasser, für den Transport der Wärmeenergie von dem hydraulischen Antrieb zu dem Wärmespeichermedium verwendet wird.

Es ist möglich, dass die Aufzugsanlage eine Steuerung aufweist, die das Erhitzen des Wärmespeichermediums durch den erzeugten elektrischen Strom und/oder die erhitzte Hydraulikflüssigkeit in Abhängigkeit eines Temperaturmesswerts des Wärmespeichermediums steuert. Die Steuerung ist vorzugsweise als eine Steuerungseinheit oder ein Steuerungsmodul ausgestaltet, die an eine bereits vorhandene Aufzugssteuerung hinzugefügt werden kann.

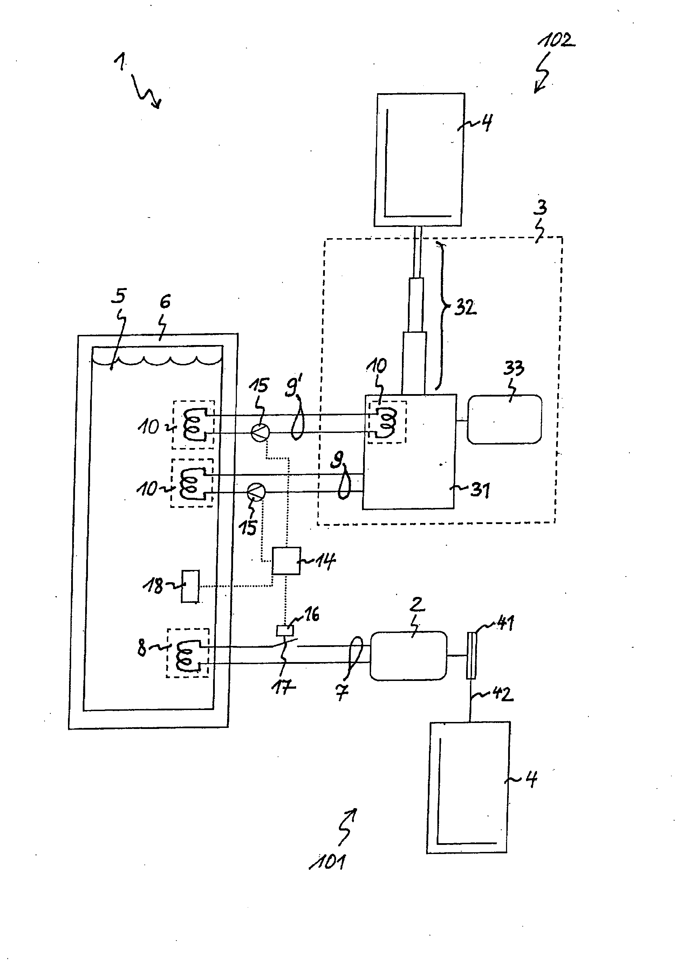

Im Folgenden wird die Erfindung anhand mehrerer Ausführungsbeispiele unter Zuhilfenahme der beiliegenden Zeichnung erläutert, die schematisch und nicht maßstabsgetreu eine Darstellung einer Aufzugsanlage 1 zeigt. Die Aufzugsanlage 1 kann als ein elektromotorisch angetriebener Aufzug 101, als ein hydraulisch angetriebener Aufzug 102 oder als eine Kombination beider Aufzugsarten 101, 102 ausgebildet sein.

Der untere Teil der Zeichnung zeigt ein Ausführungsbeispiel, bei dem die Aufzugsanlage 1 als eine Aufzugsanlage 101 mit einem elektrischen Antrieb 2 ausgebildet ist, z. B. als ein Seilaufzug 101. Die elektrisch angetriebene Aufzugsanlage 101 weist einen Fahrkorb 4 auf, der an einem Tragseil 42 aufgehängt ist, das über eine oberhalb eines Fahrschachts angeordnete Treibscheibe 41 geführt ist. Ein am anderen Ende des Tragseils 42 angeordnetes Gegengewicht ist zur Vereinfachung der schematischen Zeichnung nicht dargestellt. Die Treibscheibe 41 ist mittels eines Elektromotors 2 drehbar. Je nach Beladungszustand des Fahrkorbs 4 wird der Elektromotor 2 bei einer Aufwärts- oder Abwärtsfahrt als eine elektromotorische Bremse betrieben. Der dabei vom Elektromotor 2 erzeugte Strom wird von dem Elektromotor 2 über eine elektrische Stromleitung 7 zu einem in einem Warmwasserbehälter 6 angeordneten elektrischen Heizelement 8 geleitet, wo die elektrische Energie in Wärme umgewandelt wird. Die freigesetzte Wärme wird von einem Wärmespeichermedium 5, das sich in dem Warmwasserbehälter 6 befindet und das elektrischen Heizelement 8 umgibt, aufgenommen.

Im Inneren des Warmwasserbehälters 6 ist ein Temperatursensor 18 angeordnet, der eine Temperatur des Wärmespeichermediums 5 misst und einen entsprechenden Messwert an eine Steuerungseinheit 14 sendet. Falls der Messwert einen vorgegebenen Schwellwert überschreitet, steuert die Steuerungseinheit 14 ein Relais 16 an, das einen Kontakt 17 öffnet, so dass der Stromfluss durch die elektrische Stromleitung 7 unterbrochen wird. Auf diese Weise wird eine Überhitzung des Wärmespeichermedium 5 vermieden. Es kann vorgesehen sein, dass der vom Elektromotor 2 erzeugte Strom bei geöffnetem Kontakts 17 zu einem Bremswiderstand geleitet wird. Der Warmwasserbehälters 6 kann so dimensioniert werden, dass eine derartige Umleitung zu dem Bremswiderstand nie oder nur in Ausnahmefällen erforderlich ist.

Der obere Teil der Zeichnung zeigt ein weiteres Ausführungsbeispiel, bei dem die Aufzugsanlage 1 als eine Aufzugsanlage 102 mit einem hydraulischen Antrieb 3 ausgebildet ist. Die hydraulische Aufzugsanlage 102 weist einen Fahrkorb 4 auf, der von dem hydraulischen Antrieb 3 angetrieben wird. Der hydraulische Antrieb 3 ist als ein Hydrauliksystem ausgebildet, in dem eine von einem Pumpenmotor 33 angetriebene Hydraulikpumpe in einer Hydraulikleitung 31 enthaltene Hydraulikflüssigkeit in einen Hydraulikkolben 32 presst, auf dem der Fahrkorb 4 aufsitzt. Beim Betrieb des hydraulischen Antriebs 3 erhitzt sich die in der Hydraulikleitung 31 enthaltene Hydraulikflüssigkeit.

Die Zeichnung zeigt zwei verschiedenen Ausführungsbeispiele zur Übertragung der Wärmenergie der Hydraulikflüssigkeit auf das Wärmespeichermedium 5.

Bei einem ersten Ausführungsbeispiel wird die Hydraulikflüssigkeit durch eine Umwälzpumpe 15 von der Hydraulikleitung 31 durch einen Vorlauf einer Rohrleitung 9 zu einem in dem Warmwasserbehälter 6 angeordneten Wärmetauscher 10 transportiert, wo die Wärme von der Hydraulikflüssigkeit auf das Wärmespeichermedium 5 übertragen wird. Nach Durchfließen des Wärmetauschers 10 strömt die Hydraulikflüssigkeit durch einen Rücklauf der Rohrleitung 9 wieder in die Hydraulikleitung 31 zurück.

Falls ein vom Temperatursensor 18 gesendeter Messwert anzeigt, dass eine Temperatur des Wärmespeichermediums 5 einen vorgegebenen Schwellwert überschreitet, schaltet die Steuerungseinheit 14 die in die Rohrleitung 9 geschaltete Umwälzpumpe 15 der aus. Auf diese Weise wird eine Überhitzung des Wärmespeichermedium 5 vermieden. Es kann vorgesehen sein, dass die beim Betrieb entstehende Wärme bei ausgeschalteter Pumpe 15 als ungenutzte Abwärme an die Umgebung abgegeben wird. Der Warmwasserbehälters 6 kann so dimensioniert werden, dass eine derartige ungenutzte Wärmeabgabe an die Umgebung nie oder nur in Ausnahmefällen erforderlich ist.

Bei einem zweiten Ausführungsbeispiel wird ein separates, in einem geschlossenen Kreislauf umgewälztes Wärmetransportmedium verwendet, um die Wärme der Hydraulikflüssigkeit auf das Wärmespeichermedium 5 zu übertragen. In der Hydraulikleitung 31 ist ein Wärmeübertrager 10 angeordnet, an dem die Wärmeenergie der erhitzten Hydraulikflüssigkeit auf das Wärmetransportmedium übertragen wird. Das Wärmetransportmedium wird durch eine Umwälzpumpe 15 von dem Wärmeübertrager 10 der Hydraulikleitung 31 durch einen Vorlauf einer Rohrleitung 9' zu einem in dem Warmwasserbehälter 6 angeordneten Wärmetauscher 10 transportiert, wo die Wärme von dem Wärmetransportmedium auf das Wärmespeichermedium 5 übertragen wird. Nach Durchfließen des Wärmetauschers 10 des Warmwasserbehälters 6 strömt das Wärmetransportmedium durch einen Rücklauf der Rohrleitung 9' wieder zu dem Wärmeübertrager 10 der Hydraulikleitung 31 zurück.

Falls ein vom Temperatursensor 18 gesendeter Messwert anzeigt, dass eine Temperatur des Wärmespeichermediums 5 einen vorgegebenen Schwellwert überschreitet, schaltet die Steuerungseinheit 14 die in die Rohrleitung 9' geschaltete Umwälzpumpe 15 aus. Auf diese Weise wird eine Überhitzung des Wärmespeichermedium 5 vermieden. Es kann vorgesehen sein, dass die beim Betrieb entstehende Wärme bei ausgeschalteter Pumpe 15 als ungenutzte Abwärme an die Umgebung abgegeben wird. Der Warmwasserbehälters 6 kann so dimensioniert werden, dass eine derartige ungenutzte Wärmeabgabe an die Umgebung nie oder nur in Ausnahmefällen erforderlich ist.

Eine Aufzugsanlage 1, die sowohl einen als elektromotorische Bremse betreibbaren Elektromotor 2 als auch eine sich beim Betrieb erhitzende Hydraulikflüssigkeit aufweist, kann die oben beschriebenen Nutzungen der beim Betrieb der Aufzugsanlage freiwerdenden elektrischen und thermischen Energien kombinieren.

### Bezugszeichenliste

- 1: Aufzugsanlage
- 2: Elektromotor
- 3: hydraulischer Antrieb
- 4: Fahrkorb
- 5: Wärmespeichermedium
- 6: Behälter
- 7: elektrische Stromleitung
- 8: elektrisches Heizelement
- 9, 9': Rohrleitung
- 10: Wärmetauscher
- 14: Steuerungseinheit
- 15: Pumpe
- 16: Relais
- 17: Kontakt
- 18: Temperatursensor
- 31: Hydraulikleitung
- 32: Hydraulikkolben
- 33: Pumpenmotor
- 41: Treibscheibe
- 42: Tragseil
- 101: Seilaufzug
- 102: hydraulischer Aufzug

## Patentansprüche

1. Aufzugsanlage (1) mit einem elektrischen Antrieb (2) und/oder hydraulischen Antrieb (3) zum Antreiben eines Fahrkorbs (4), wobei von dem als eine elektromotorische Bremse betriebenen elektrischen Antrieb (2) erzeugter elektrischer Strom und/oder eine beim Betrieb des hydraulischen Antriebs (3) erhitzte Hydraulikflüssigkeit zum Erhitzen eines Wärmespeichermediums (5) dient.

2. Aufzugsanlage (1) nach Anspruch 1,
**dadurch gekennzeichnet,**
**dass** das Wärmespeichermedium (5) Wasser eines Warmwasserspeichers und/oder einer Warmwasserheizung ist.

3. Aufzugsanlage nach einem der Ansprüche 1 oder 2,
**dadurch gekennzeichnet,**
**dass** die Aufzugsanlage (1) eine elektrische Stromleitung (7) aufweist, die der Leitung des elektrischen Stroms von dem elektrischen Antrieb (2) zu einem elektrischen Heizelement (8) zum Erhitzen des Wärmespeichermediums (5) dient.

4. Aufzugsanlage (1) nach einem der vorhergehenden Ansprüche,
**dadurch gekennzeichnet,**
**dass** die Aufzugsanlage (1) eine Rohrleitung (9) aufweist, die dem Transport der erhitzten Hydraulikflüssigkeit von dem hydraulischen Antrieb (3) zu einem Wärmetauscher (10) zur Übertragung thermischer Energie von der erhitzten Hydraulikflüssigkeit auf das Wärmespeichermedium (5) dient.

5. Aufzugsanlage (1) nach einem der vorhergehenden Ansprüche,
**dadurch gekennzeichnet,**
**dass** die Aufzugsanlage (1) einen Wärmetauscher (10) zur Übertragung thermischer Energie von der erhitzten Hydraulikflüssigkeit auf ein Wärmetransportmedium, das dem Transport der thermischen Energie zu dem Wärmespeichermedium dient (5), aufweist.

6. Aufzugsanlage (1) nach einem der vorhergehenden Ansprüche,
**dadurch gekennzeichnet,**
**dass** die Aufzugsanlage (1) eine Steuerung (14) aufweist, die das Erhitzen des Wärmespeichermediums (5) durch den erzeugten elektrischen Strom und/oder die erhitzte Hydraulikflüssigkeit in Abhängigkeit eines Temperaturmesswerts des Wärmespeichermediums (5) steuert.

7. Verfahren zum Betreiben einer Aufzugsanlage (1) mit einem elektrischen Antrieb (2) und/oder hydraulischen Antrieb (3) zum Antreiben eines Fahrkorbs (4), wobei von dem als eine elektromotorische Bremse betriebenen elektrischen Antrieb (2) erzeugter elektrischer Strom und/oder eine beim Betrieb des hydraulischen Antriebs (3) erhitzte Hydraulikflüssigkeit zum Erhitzen eines Wärmespeichermediums (5) verwendet wird.
